# EUROPEAN PATENT APPLICATION

(11) **EP 4 803 220 A1**
(43) Date of publication of application: **09.09.2026**
(21) Application number: 24884810.3
(22) Date of filing: 30.10.2024
(51) Int. Cl.: B21B 1/38, B21C 37/02, C22C 38/04

(54) **CORROSION-RESISTANT ROLLED CLAD STEEL PLATE FOR MEDIUM-TEMPERATURE EQUIPMENT AND MANUFACTURING METHOD THEREFOR**

(30) Priority: 31.10.2023 CN 202311425065
(71) Applicant: BAOSHAN IRON & STEEL CO., LTD., Shanghai 201900 (CN)
(72) Inventor: LIU, Zili, Shanghai 201900 (CN); ZHANG, Hanqian, Shanghai 201900 (CN); HOU, Hong, Shanghai 201900 (CN)
(74) Representative: V.O.
(86) International application number: PCT/CN2024/128468
(87) International publication number: WO 2025/092810

(57) **Abstract**

A corrosion-resistant rolled clad steel plate for medium-temperature equipment and a manufacturing method therefor. The clad steel plate comprises a base material, a cladding layer, and a transition layer between the base material and the cladding layer; in percentage by weight, the base material is prepared from the following components: C: 0.01%-0.15%, Si: 0.2%-0.7%, Mn: 0.1%-1.70%, Ti: 0.006%-0.025%, Als: 0.004%-0.015%, Nb: 0.0010%-0.050%, V: 0.15%-0.50%, B: 0.0005%-0.0050% N: 0.0015%-0.0050%, P ≤ 0.0165%, S ≤ 0.010%, O ≤ 0.005%, and the balance being Fe and other unavoidable impurities. By preventing or reducing the diffusion of carbon on a carbon steel side of the base material at an interface of the clad steel plate, the possibility of failure caused by intergranular corrosion of stainless steel at the cladding layer side is reduced, the corrosion resistance and the safety of the rolled clad steel plate are comprehensively improved, and the present invention is suitable for 300-450°C medium-temperature equipment in energy production fields such as petroleum refining and the coal chemical industry.

## Description

### Technical Field

The present disclosure relates to a corrosion-resistant steel and a method for manufacturing the same, particularly to a corrosion-resistant rolled clad steel plate for medium-temperature equipment and a method for manufacturing the same, suitable for medium-temperature equipment with operating temperatures of 300 ~ 450°C in the fields of petroleum refining and coal chemical industry and other energy production.

### Background Art

Clad steel plates composed of low-alloy steel and various corrosion-resistant materials are often used in crude oil processing, energy and chemical industries due to their high mechanical strength and excellent corrosion resistance. Along with the rapid development of China's economy, the demand for various energy-related raw materials such as petroleum and fertilizers is increasing. To enhance energy production efficiency, it is imperative to make energy production and processing equipment larger, highly parameterized (higher temperature, higher pressure) and lighter. This demand for equipment upgrade imposes higher requirements on the performances of the steel plates used for manufacturing the equipment. Specifically, these steel plates must have not only higher strength and hardness, but also excellent toughness, processing and forming performances, as well as better corrosion resistance.

The traditional production process for clad steel plates is explosive cladding. The main problem with this production process is that when an explosive is used to carry out the explosive cladding, it will generate a large amount of harmful gases, which has an adverse impact on the environment. In other words, this type of production process does not meet the environmental protection requirements. In addition, the bonding rate at the interface of the explosion clad steel plate is low, sometimes failing to meet the requirement of a bonding rate of at least 97%. If this type of steel plate is used to manufacture various high-temperature, high-pressure, and large-scale container equipment, there will be notable safety concerns. Once the bonding joint of the clad steel plate breaks, the equipment will malfunction, which will have a huge impact on the personnel and property safety.

Compared to explosion clad steel plates, rolled clad steel plates have a bonding rate that is significantly increased to at least 99%, and the production process is more environmentally friendly than explosive cladding. Therefore, in recent years, the production scale and engineering application volume of rolled clad steel plates have been expanding year by year.

However, no matter in the case of an explosion clad steel plate or a rolled clad steel plate, a certain transition layer is generated at the interface between the carbon steel and the corrosion-resistant material. The composition of the transition layer is relatively complex. Especially during long-term service under medium-temperature working conditions of 300~450°C, alloying elements in the carbon steel substrate will migrate and diffuse through the transition layer into the cladding material, causing changes in the microstructure of the corrosion-resistant material and thereby adversely affecting the corrosion resistance of the corrosion-resistant cladding material.

Therefore, in order to improve the comprehensive properties of rolled clad steel plates, an urgent requirement is to reasonably design the alloy composition and production process of the carbon steel substrate layer, control the microstructure and precipitated phases of the carbon steel material, minimize the diffusion behavior of elements in the substrate carbon steel-especially carbon-under long-term high-temperature conditions, and avoid the negative effect of increased carbon in the corrosion-resistant material and the formation of a large number of carbides, which causes intergranular corrosion in stainless steel and thus deteriorates its corrosion resistance.

Prior arts include, for example, Chinese Patent Publication Number CN103934266A, which discloses "A Preparation Method of a Copper/Aluminum Clad Strip with Reduced Interface Layer Thickness". The invention adopts soft-state T2 pure copper strip as the copper raw material, and soft-state aluminum-silicon alloy strip with a silicon mass percentage of 3.25~8.89% as the aluminum-silicon alloy raw material. The thickness ratio of the copper raw material to the aluminum-silicon alloy raw material is 1:1. They are rolled and clad to form a rolled clad strip, followed by diffusion annealing: heated to 200~400°C under inert gas protection, held for 0.5~2 hours, and then furnace-cooled to room temperature. The main purpose of the method disclosed in this invention is to obtain a copper/aluminum clad strip with high dimensional accuracy, thin clad interface, firm bonding and good surface quality while saving 50% of copper material. Since the materials involved in the invention are pure copper and aluminum-silicon alloy, whose properties are quite different from those of low-alloy steel and stainless steel, the method for reducing interface layer thickness mentioned in this patent application is not applicable to rolled clad steel plates of low-alloy steel and stainless steel.

Chinese Patent Publication Number CN108116006A discloses "A Super Austenitic Stainless Steel Rolled Clad Steel Plate and Manufacturing Method of SAME". In this patent application, a carbon steel slab and an austenitic stainless steel slab are assembled and then rolled, finally obtaining a rolled clad steel plate material consisting of a carbon steel substrate layer and an austenitic cladding layer. However, the material disclosed in this patent application does not involve the influence of elemental diffusion at the interface on the corrosion resistance of the cladding material.

Chinese Patent Application Publication Number CN108085585A discloses "A High-strength Corrosion-resistant Clad Patterned Steel and Manufacturing Method of SAME". In this rolled clad steel plate, the base layer is carbon steel, and the cladding layer is austenitic stainless steel. The thickness of the clad steel plate is no more than 10 mm. The present application directly assembles the carbon steel slab and the austenitic stainless steel slab, and subjects the assembly to hot rolling and a coiling process to obtain a rolled clad plate coil finally. This application mentions the thickness of the transition layer, but does not involve relevant content such as the diffusion of elements in the transition layer.

In view of the above patent applications, the existing technologies for rolled clad steel plates have given little consideration to the transition layer at the interface where the base layer and the cladding material are bonded. In particular, the influence of carbon diffusion from the substrate carbon steel into the cladding material through the interface under long-term high-temperature service conditions on the corrosion resistance of the cladding material has not been considered. Therefore, the technical solutions in these patent applications have not taken any specific measures to reduce the possibility of weakening the stainless steel's corrosion resistance at the interface of the composite material by the carbide precipitation. In particular, in the chemical and energy industries, the operating temperature of clad steel plate manufacturing equipment is often in the range of 300-450 °C. If it operates at a high temperature for a long time, the elements at the material interface may diffuse again. In particular, the carbon element on the carbon steel side diffuses into the stainless steel cladding layer, forming more carbides, which further reduces the corrosion resistance of the stainless steel and renders latent danger of accidents.

### Summary of the Invention

The object of the present invention is to provide a corrosion-resistant rolled clad steel plate for medium-temperature equipment and a method for manufacturing the same. By blocking or reducing the diffusion of carbon from the substrate carbon steel side at the interface of the clad steel plate, the risk of failure caused by intergranular corrosion of the stainless steel on the cladding side is reduced, and the corrosion resistance and safety performance of the rolled clad steel plate are comprehensively improved. The steel plate is suitable for medium-temperature equipment operating at 300~450 °C in energy manufacturing fields such as petroleum refining and coal chemical industry. It should be understood that the term "medium-temperature" as used herein refers to the temperature range of 300~450 °C.

To achieve the above object, the technical solution of the present disclosure is as follows:
In the clad steel plate of the present disclosure, a large number of finely dispersed MC (M represents one or more of V, Nb, Ti) precipitates with stable high-temperature properties form in the base carbon steel. These stable carbide precipitates can fix the carbon element of the steel in the base carbon steel, thereby avoiding diffusion and migration of the carbon element in the substrate towards the rolled clad steel plate near the bonding interface (i.e. the transition layer) under process conditions of 300~450°C. Such diffusion and migration would lead to an increase in the carbon element concentration in the stainless steel near the interface, and in turn, lead to generation of a large number of carbide precipitates at the stainless steel grain boundaries, thereby inducing intergranular corrosion, and ultimately weakening or even losing the anti-corrosion function of the clad material.

Specifically, the corrosion-resistant rolled clad steel plate for medium-temperature equipment according to the present disclosure is made by bonding and rolling carbon steel as a substrate and stainless steel as a cladding layer. Therefore, the corrosion-resistant rolled clad steel plate for medium-temperature equipment according to the present disclosure comprises a substrate layer, a cladding layer, and a transition layer between the substrate layer and the cladding layer, wherein the substrate layer comprises the following components by weight percentage: C: 0.01%-0.15%, Si: 0.20%-0.70%, Mn: 0.10%-1.70%, Ti: 0.006%-0.025%, Als: 0.004%-0.015%, Nb: 0.0010%-0.050%, V: 0.15%-0.50%, B: 0.0005%-0.0050%, N: 0.0015%-0.0050%, P≤0.0165%, S≤0.010%, O≤0.005%, and a balance including Fe and other unavoidable impurities.

The surface microstructure of the substrate layer is 60-80% by area of bainite + 20-40% by area of ferrite + MC precipitates, and the central microstructure of the substrate layer is 30-40% by area of bainite + 60-70% by area of ferrite + MC precipitates, wherein M represents one or more of Nb, V, and Ti, the average major axis length of the MC precipitates is less than 500 nm, and the bulk density of the MC precipitates with a major axis length of less than 500 nm is greater than 2.0 × 10⁴ precipitates/mm³.

The microstructure of the cladding layer comprises MC precipitates, where M represents one or more of Cr, Nb, Mo, and Ti, the average major axis length of the MC precipitates is less than 700 nm, and the bulk density of the MC precipitates is less than 1.0 × 10⁴ precipitates/mm³.

Further, the balance of the substrate layer is Fe and other unavoidable impurities.

Still further, the substrate layer further comprises at least one of the following chemical elements: 0 < Ca ≤ 0.0055%, 0 < Ni ≤ 0.65%, and 0 < Cu ≤ 0.55%.

Preferably, the stainless steel mentioned herein may be any type of stainless steel well known in the art, including but not limited to austenitic stainless steel, ferritic stainless steel, duplex stainless steel, or super stainless steel. The present disclosure can be implemented using a readily available stainless steel product or self-prepared stainless steel as a cast slab for the cladding layer in the present disclosure.

In some embodiments, the stainless steel comprises the following components by weight percentage: C: 0.01-0.05%; Si: 0.50-0.80%; Mn: 1.10-1.50%; Ni: 6.5-9.5%; Cr: 15.0-22.0%; N: 0.060-0.120%; P: ≤0.015%; S: ≤0.005%; O: ≤0.005%; a balance of Fe and other unavoidable impurities.

Preferably, the proportion of the MC precipitates with a major axis length of less than 500 nm in the substrate layer of the clad steel plate is greater than 50% of the total number of the MC precipitates.

Preferably, the proportion of the MC precipitates with a major axis length of less than 700 nm in the cladding layer of the clad steel plate is greater than 50% of the total number of the MC precipitates.

Further, the microstructure of the cladding layer of the clad steel plate further comprises an extremely small amount of σ phase, with the proportion of the σ phase (by area) being ≤1.5%, preferably, the proportion of the σ phase near the transition layer being ≤0.5%.

Preferably, the thickness of the substrate layer of the clad steel plate is ≥6 mm, and the thickness of the cladding layer is ≥2 mm; preferably, the thickness of the transition layer is ≤230 µm. In some embodiments, the thickness of the substrate layer is 6-200 mm. In some embodiments, the thickness of the substrate layer is 10-200 mm. In some embodiments, the thickness of the cladding layer is 2-20 mm. In some embodiments, the thickness of the transition layer is 2-230 µm. In some embodiments, the thickness of the transition layer is 2-150 µm. In some embodiments, the thickness of the transition layer is 2-50 µm. In the present disclosure, the thicknesses of the substrate layer and the cladding layer are measured in accordance with GB/T 6396-2008, and the thickness of the transition layer is measured in accordance with GB/T 6462-2005.

The substrate layer of the clad steel plate of the present disclosure has a yield strength of ≥325 MPa, a tensile strength of ≥430 MPa, a percentage reduction of area of ≥60%, an elongation of ≥19%, an impact absorption energy at -30 °C of ≥100 J, and an impact absorption energy at -50 °C of ≥45 J; the grain size grade of the substrate is not lower than 7.0; and the clad steel plate at the clad interface has a shear strength of ≥310 MPa.

In some embodiments, the yield strength of the substrate layer of the clad steel plate of the present disclosure is ≥360 MPa. In some embodiments, the yield strength of the substrate layer of the clad steel plate of the present disclosure is ≥380 MPa. In some embodiments, the yield strength of the substrate layer of the clad steel plate of the present disclosure is between 380 MPa and 500 MPa.

In some embodiments, the tensile strength of the substrate layer of the clad steel plate of the present disclosure is ≥450 MPa. In some embodiments, the tensile strength of the substrate layer of the clad steel plate of the present disclosure is ≥480 MPa. In some embodiments, the tensile strength of the substrate layer of the clad steel plate of the present disclosure is between 480 MPa and 600 MPa.

In some embodiments, the percentage reduction of area of the substrate layer of the clad steel plate of the present disclosure is ≥70%. In some embodiments, the percentage reduction of area of the substrate layer of the clad steel plate of the present disclosure is between 60% and 80% or between 70% and 80%.

In some embodiments, the elongation of the substrate layer of the clad steel plate of the present disclosure is ≥21%. In some embodiments, the elongation of the substrate layer of the clad steel plate of the present disclosure is between 19% and 25%.

In some embodiments, the substrate layer of the clad steel plate of the present disclosure has an impact absorption energy at -30 °C of ≥150 J. In some embodiments, the substrate layer of the clad steel plate of the present disclosure has an impact absorption energy at -30 °C of ≥180J. In some embodiments, the substrate layer of the clad steel plate of the present disclosure has an impact absorption energy at -30 °C of 100-240 J, such as 180-240 J.

In some embodiments, the substrate layer of the clad steel plate of the present disclosure has an impact absorption energy at -50 °C of ≥80 J. In some embodiments, the substrate layer of the clad steel plate of the present disclosure has an impact absorption energy at -50 °C of ≥100 J. In some embodiments, the substrate layer of the clad steel plate of the present disclosure has an impact absorption energy at -50 °C of ≥140 J. In some embodiments, the substrate layer of the clad steel plate of the present disclosure has an impact absorption energy at -50 °C of 45-180 J, or 80-180 J, or 100-180 J, or 140-180 J.

In some embodiments, the shear strength of the substrate layer of the clad steel plate at the clad interface of the present disclosure is ≥330 MPa. In some embodiments, the shear strength of the substrate layer of the clad steel plate at the clad interface of the present disclosure is 310-420 MPa

In the composition designed for the clad steel plate substrate layer according to the present disclosure:
C: C is an important strengthening element. In order to impart appropriate strength to a carbon steel plate, it's necessary to control the mass percentage of the C element in the steel to be greater than or equal to 0.01%. On the other hand, in order to improve the weldability of the carbon steel material of the substrate layer, it's necessary to control the content of the C element in the carbon steel to be not too high. In addition, if the carbon content in the carbon steel substrate layer is high, the difference in carbon concentration gradients between the two materials will lead to large-scale carbon migration at the interface between the substrate layer and the stainless steel cladding material, causing intergranular corrosion in the stainless steel. Therefore, the upper limit of the C element is controlled to be 0.15%. Accordingly, in view of the above, the C content is controlled at 0.01-0.15% in the present disclosure.
Si: Similar to C, Si is also a strengthening element commonly used in low alloy steel. The addition of a certain amount of Si to steel can improve the strength performance of the steel. Meanwhile, Si also has a function of deoxidation. During a smelting process, it can play an auxiliary role in deoxidation. Most of the SiO₂ product formed after deoxidation gets into the steel slag to be removed, and thus has no influence on the performances of the steel. In addition, the addition of a certain amount of Si to steel can reduce the solubility of carbon in austenite, thereby promoting precipitation of carbon, promoting formation of MC precipitates, fixing carbon in the steel, and preventing large-scale diffusion of carbon. Therefore, a certain amount of Si needs to be added to the steel. However, an excessive Si content may deteriorate the weldability of the steel. Since silicon has a stronger affinity for oxygen than iron, it's more likely to form low-melting-point silicates during welding. This increases the fluidity of slag and molten metal, causing spattering and affecting the quality of the weld joint. Therefore, controlling the silicon content within a certain range helps to improve the weldability and formability of the steel. Hence, the Si content is controlled at 0.20-0.70% in the present disclosure.
Mn: Mn is also an important strengthening element, which can effectively improve the strength of the substrate layer of the steel plate. Meanwhile, Mn is an element that can stabilize austenite effectively. The addition of a certain amount of Mn can increase the hardenability of steel. Therefore, in order to guarantee the strength of the steel, the lower limit of the Mn content is 0.1%. However, Mn is very prone to causing center segregation in steel. Adding excessive Mn will cause severe segregation at the center of the thickness of the steel plate, reducing the low-temperature toughness at the core of the steel plate. Therefore, the upper limit of the Mn content may be limited to 1.7%. In view of the above, the Mn content is controlled at 0.10%-1.7% in the present disclosure.
Ti: Ti is a deoxidizing element and is also a strong carbide-forming element and nitride-forming element. In the present disclosure, on the one hand, the addition of an appropriate amount of the Ti element enables formation of stable MC precipitates in the steel, fixing the carbon element in the substrate layer, and preventing it from diffusing to the interface of the composite material. Meanwhile, the Ti element partially participates in fixing the free N element in the steel to form TiN precipitates. The TiN precipitates can prevent growth of austenite grains, refine the grains, and improve the strength and toughness of the steel plate. Ti fixes some of the free nitrogen element, which helps to ensure that the B element in the steel exists in a free state and improve the hardenability of the steel. In addition, deoxidation with titanium can form Ti₂O₃ particles, thereby promoting the formation of intragranular ferrite and improving the low-temperature impact toughness of the steel. However, when the Ti content in steel is too high, the size of the TiN and Ti₂O₃ particles becomes larger, which are no longer able to hinder austenite growth and formation of intragranular ferrite. Instead, they are likely to become a source of crack initiation, reducing the low-temperature impact toughness of the steel. Therefore, the upper limit of Ti is 0.025%. In view of the above, the Ti content is controlled at 0.006-0.025% in the present disclosure.
Als: Firstly, Als is an important deoxidizing element that forms alumina inclusions. Moreover, the Al element can combine with the N element in steel to form AlN precipitates, which reduces the content of free N in the steel. This prevents the combination of B and N in the steel, increases the free B content in the steel, improves the hardenability of the steel, and helps to improve the strength performances of the steel plate. However, if the content of acid-soluble aluminum in the steel is too high, the size of the deoxidation product, alumina, will increase. Since the alumina inclusions have a strong ability to adhere to each other, large alumina agglomerates will form. On the one hand, they will clog the nozzle during steelmaking and affect the casting process of molten steel. If these large agglomerated inclusions enter the steel plate, they will cause the steel plate to fail the inclusion rating and flaw detection. Therefore, the content of Als is controlled at 0.004-0.015% in the present disclosure.
Nb: Nb is a strong carbide-forming element. Nb can combine with the carbon element in steel to form MC precipitates, thereby stabilizing the carbon element in the steel and preventing the carbon element from diffusing to the bonding interface. Meanwhile, the addition of an appropriate amount of Nb can increase the recrystallization temperature of the steel. When the steel is recrystallized in the austenite region and rolled, the austenite grains will not grow rapidly, resulting in fine-grained steel with higher strength and toughness. However, when the Nb content in the steel is too high, it will result in a larger MC precipitate size, which will reduce the toughness of the steel plate and worsen the toughness of the weld heat-affected zone. Therefore, the Nb content is controlled at 0.0010-0.050% in the present disclosure.
V: As a strong carbide-forming element, an appropriate amount of vanadium added can combine with free carbon in steel to form stable VC precipitates. On the one hand, this fixes carbon in the steel; on the other hand, fine VC precipitates produce a precipitation strengthening effect and increase the strength of the steel plate. However, excessive vanadium addition results in an overabundance of vanadium dissolved in the ferrite matrix, thereby weakening the interatomic bonding force. Accordingly, the vanadium content is controlled at 0.15%~0.50% in the present disclosure.
B: The purpose of adding an appropriate amount of the B element is to compensate for the decrease in the strength performances of a steel plate due to the decrease in the solid-solution carbon content in the steel after fixing the carbon element by carbides. If the B element in the steel exists in a free state, some of it will preferentially occupy grain boundary sites, thus improving the hardenability of the steel plate. Its function depends on a precondition that B must exist in a free state within the steel. Therefore, in order to prevent boron in the steel from combining with oxygen and nitrogen to form boron oxide and boron nitride, the oxygen and nitrogen contents in the steel must be well controlled, which is also a key point in alloy composition design. However, it should be noted that if too much boron is added to the steel, the excessive boron will easily lead to heavy segregation at the grain boundaries, which will be detrimental to the toughness of the steel. Therefore, the B content is controlled at 0.0005-0.0050% in the present disclosure.
N: In the design of the alloy composition in the present disclosure, appropriate amounts of the Ti and Al elements are added. These two elements can form TiN and AlN precipitates with the N element in the steel. When these precipitates are fine and dispersed, they can refine austenite grains, thereby improving the strength and toughness of the steel plate. However, when the nitrogen content in the steel is too high, the surplus nitrogen will combine with the boron element in the steel to form BN, which consumes the free boron element in the steel and thus reduces the effect of the boron element on improving the strength of the steel plate. At the same time, too much nitrogen will have an adverse effect on the toughness of the steel, especially when the content of the solid-solution nitrogen exceeds 0.005%, which will significantly reduce the low-temperature toughness of the steel plate. Therefore, the N content is controlled at 0.0015-0.0050% in the present disclosure.

Preferably, the substrate layer of the clad steel plate according to the present disclosure further comprises at least one of the following chemical elements: 0 < Ca ≤ 0.0055%, 0 < Ni ≤ 0.65%, and 0 < Cu ≤ 0.55%.

Ca: Ca is a strong deoxidizing element. Adding an appropriate amount of calcium allows control of the oxygen content in steel, thereby preventing oxidation of the B element. However, if the Ca content in the steel exceeds 0.0055%, large inclusions of calcium oxide and calcium sulfide tend to form in the steel, which is detrimental to the toughness of the steel. Therefore, the Ca content is controlled at 0 < Ca ≤ 0.0055% in the present disclosure.

Ni: Ni is a typical element for stabilizing austenite. It can significantly improve the hardenability of a steel plate, as well as the low-temperature toughness of the steel plate. However, Ni is expensive. With the production cost of the steel plate taken into account, it is not advisable to add an excessive amount of Ni to the steel. Therefore, the Ni content is controlled at 0 < Ni ≤ 0.65% in the present disclosure.

Cu: The addition of an appropriate amount of Cu helps to improve the strength of the steel and enhance the corrosion resistance of the steel. However, if the content of Cu added to the steel is too high, the steel plate tends to have high-temperature brittleness at high temperatures. Therefore, the Cu content is controlled at 0<Cu≤0.55% in the present disclosure.

It should be noted that the addition of the above-mentioned Ca, Ni and Cu elements will increase the production cost of the material. Taking into account both the performances and the cost control, preferably, at least one of the above-mentioned elements may be added in the technical solution according to the present disclosure.

Among the unavoidable impurities in the substrate layer of the clad steel plate according to the present disclosure, P is ≤0.0165%, S is ≤0.010%, O is ≤0.005%.

P: P is a harmful element for most steel plates. The main reason is that phosphorus (P) segregates extremely easily towards grain boundaries, weakening the bonding force between atoms at the grain boundaries and causing temper embrittlement of the steel plate. Especially, when the steel plate is processed at high temperature conditions, the temper embrittlement effect of the P element is further exacerbated. Therefore, in the present disclosure, the content of the P element is controlled at P≤0.0165%.

S: It's extremely easy for the S element in steel to combine with the Mn element in the steel to form MnS inclusions. The higher the S content, the larger the size of the MnS inclusions formed, which is detrimental to the strength and toughness of the steel plate. At the same time, an unduly high sulfur content will lead to center segregation in the slab, and also tend to cause hot cracking. Therefore, in the present disclosure, the content of the S element is controlled at S≤0.010%.

O: The oxygen element in steel mainly exists in the form of oxides. When the O content in the steel is too high, it suggests that there are too many oxides in the steel, and large inclusions are likely to be present, which affects the strength and toughness of the steel plate. Therefore, in the present disclosure, the content of the O element is controlled at O≤0.005%.

The surface microstructure of the substrate layer of the clad steel plate according to the present disclosure is 60~80% bainite + 20~40% ferrite + MC precipitates; the central microstructure of the substrate layer is 30~40% bainite and 60~70% ferrite + MC precipitates. The microstructure of the surface layer of the substrate is dominated by bainite and supplemented by ferrite, mainly to ensure the strength and toughness of the substrate layer. In particular, when the steel plate is in service for a long time at 300~450°C, part of the free carbon that exerts solution strengthening will transform into the second phase, which would reduce the strength of the surface layer of the substrate. At this time, bainite strengthening can ensure that the material strength remains above the designed minimum strength. The increased proportion of ferrite in the central microstructure can further compensate for the deterioration of material toughness at the mid-thickness position caused by segregation in the core of the continuous casting slab.

The substrate layer in the present disclosure has stable MC precipitates, wherein M represents one or more of Nb, V, and Ti, and the average major axis length of the MC precipitates is less than 500 nm. An excessively large precipitate size is prone to adversely affect the mechanical properties of the substrate layer. Hence, it is necessary to control the average major axis length of the MC precipitates to be less than 500 nm. In the present disclosure, it's desirable to form small-sized carbide precipitates as many as possible in the substrate layer to ensure that the carbon fixation effect of the carbides is fully exerted without adversely affecting the mechanical properties of the steel plate due to carbide precipitation. Therefore, the proportion of MC precipitates with a major axis length of less than 500 nm to the total number of MC precipitates is limited to more than 50%.

Preferably, the bulk density of the MC precipitates with a major axis length of less than 500 nm in the substrate layer is greater than 2.0×10⁴ precipitates/mm³. In the substrate layer of the present invention, free carbon element in the steel is fixed by forming MC precipitates, so as to prevent the diffusion of free carbon element into the cladding material. Therefore, in the present disclosure, it is necessary to ensure that the bulk density of MC is greater than 2.0×10⁴ precipitates/mm³ so as to effectively control the carbon element in the steel and avoid heavy diffusion of the free carbon element to the stainless steel side.

The cladding layer material of the clad steel plate according to the present disclosure has stable MC precipitates, wherein M represents one or more of Cr, Mo, Nb, and Ti, and the average major axis length of the MC precipitates is less than 700 nm. The larger the size of the carbides in the cladding layer material, the greater the impact on the corrosion resistance of the stainless steel. Therefore, it is desirable for the size of the carbide precipitates in the cladding layer material to be as small as possible. However, in the production process of the cladding layer material and the rolled clad steel plate, some carbide precipitates are inevitably generated. In order to ensure the corrosion resistance of the rolled clad steel plate, the present disclosure requires that the average major axis length of the MC precipitates in the cladding layer material be less than 700 nm.

The bulk density of the MC precipitates in the cladding layer material of the present disclosure is less than 1.0×10⁴ precipitates/mm³. As for controlling the number of carbide precipitates in the cladding layer material, it is desirable to have as few carbides as possible, that is, to control the bulk density as low as possible. However, some carbides will inevitably form during the heat treatment of the clad steel plate. Controlling the bulk density of carbides to less than 1.0×10⁴ precipitates/mm³ can guarantee superior corrosion resistance of the cladding layer material.

Preferably, the proportion of the MC precipitates with a major axis length of less than 700 nm in the cladding layer material of the present disclosure is greater than 50% of the total number of the MC precipitates. In the present disclosure, the "bulk density" of the MC precipitates is measured according to the method described in Standard YB/T 5320-2006. In order to minimize the carbide precipitates in the cladding layer material to increase the corrosion resistance of the cladding layer material, the present disclosure limits the size and number of the MC precipitates, that is, the proportion of the MC precipitates with a major axis length of less than 700 nm is greater than 50% of the total number of the MC precipitates. If the quantity and size of the carbide precipitates exceed the limits, the corrosion resistance of the cladding layer material will be reduced notably, affecting the safe service performance of the rolled clad steel plate.

The cladding layer in the present disclosure is stainless steel (austenitic stainless steel, ferritic stainless steel, duplex stainless steel, super stainless steel, and the like). The σ phase in the microstructure is an intermetallic phase with high hardness and low plasticity. When it precipitates along grain boundaries, it will have a large impact on the plasticity of the steel, resulting in a significant reduction in the impact toughness of the steel. Therefore, the σ phase proportion in the stainless steel is ≤1.5%. Especially, the σ phase proportion is ≤0.5% near the bonding interface (transition layer).

The present disclosure further provides a method for manufacturing the corrosion-resistant rolled clad steel plate for medium-temperature equipment, including the following steps:
1) Smelting and casting, preparing cast slabs for a substrate and a cladding layer
   The above-mentioned composition is smelted and cast into a cast slab for a substrate. During the smelting process, deoxidizers Mn+Si, Al, and Ti alloy are added to a molten steel for deoxidation; during this process, Mn+Si and Al are added sequentially for pre-deoxidation. After pre-deoxidation, the oxygen level of the molten steel is 0.0020%-0.0075%. Then, Ti is added for final deoxidation. After deoxidation, B element and other alloying elements are added. Then, an injection method is adopted to cast a cast slab for the substrate. Stainless steel is prepared or provided as a cast slab for a cladding layer.
2) Assembling slabs
   The cast slab for the substrate and the cast slab for the cladding layer are surface treated, and then stacked. The periphery of the stacked slabs is welded and sealed, vacuumed, and sealed again to form a clad slab. Preferably, the vacuum degree after vacuuming is 8-60 Pa.
3) Rolling the clad slab
   The clad slab is heated to 1050-1220 °C and then subjected to two-stage rolling. In the first stage, the slab is rolled to an accumulated reduction rate of no less than 60% (e.g., 60-70%). In the second stage, the slab is rolled to an accumulated reduction rate of no less than 20% (e.g., 20-35%), and the reduction rate in the last pass is 8-18%. The accumulated reduction rate is not less than 80% (e.g., 80-98%). The final rolling temperature is at least 850 °C (e.g., 850-960 °C).
4) Heat treatment

The clad steel plate is quenched and tempered.

Preferably, in step 2), the cast slabs for the substrate and the cladding layer are surface treated to ensure that the slab surfaces are free of obvious surface defects of oil stains, slag inclusions, and cracks, while ensuring that the roughness of the processed surfaces of the slabs is not greater than 2.0Ra.

Preferably, in step 4), the quenching temperature is 935-975 °C; the quenching hold time is T1=(1-1.2) H; after the hold time is over, the clad steel plate is removed from the quenching furnace and water-cooled to room temperature, wherein the unit of T1 is min, and H is the thickness of the substrate layer in mm.

Preferably, in step 4), the tempering temperature is 650-725 °C; the tempering hold time is T2=(1-1.5) H; after the hold time is over, the clad steel plate is removed from the tempering furnace and water-cooled to room temperature, wherein the unit of T2 is min, and H is the thickness of the substrate layer in mm.

In the manufacturing method of the present disclosure:
According to the present disclosure, a large number of uniformly dispersed nanoscale MC precipitates are desirably generated in the substrate layer of the clad steel plate. The MC precipitates serve to fix the free carbon element in the carbon steel substrate layer, thereby preventing the carbon element from diffusing to the interface between the substrate layer and the cladding material in large quantities to cause formation of carbides in the stainless steel and, in turn, degradation of its corrosion resistance. As a result, the service safety performance of the rolled clad steel plate for high-temperature equipment is improved. However, free carbon in steel is a major strengthening element for a carbon steel substrate layer. When most of the free carbon element is fixed in the form of MC, the strength of carbon steel will decrease. In order to compensate for the strength loss due to the fixation of the carbon element, it's necessary to add the B element to improve the hardenability of the steel plate. The function of the B element to improve the hardenability mainly depends on free B distributed along the grain boundaries. Because B is an extremely active element, it can combine with oxygen in molten steel to form boron oxide on one hand, and on the other hand, boron can also combine with N easily to form boron carbide. Therefore, in the technical solution of the present disclosure, the deoxidation sequence of molten steel and the timing of the addition of B are designed specifically. That is, during deoxidation, Si+Mn are used for pre-deoxidation first, and most of the silicon oxide and manganese oxide float to the top slag. Using the strong deoxidizer Al for deoxidation, the oxygen level (determined according to the method for measuring oxygen content in molten steel as described in ISO 14284:1996) can be controlled relatively precisely at 0.0020-0.0075%. Then, Ti is used for final deoxidation, forming a large amount of Ti oxide. At the same time, Ti added can combine with the free nitrogen element in the steel to form TiN. In other words, the addition of Ti further reduces the free oxygen concentration in the steel. Within a certain range of oxygen level (0.0020-0.0075%), the size of the Ti₂O₃ inclusions formed after deoxidation is suitable (2-5 µm), which is beneficial for the formation of some acicular ferrite structure during solidification and subsequent phase transformation, thus improving the toughness of the steel plate. In addition, Ti can also combine with N in the steel to generate some TiN. On the one hand, this reduces the adverse effect of solid-solution nitrogen on the toughness of the steel. On the other hand, TiN can precipitate at high temperatures during solidification to pin the growth of austenite and refine the original austenite grains. Once the contents of oxygen and titanium elements in the steel are properly controlled, an appropriate amount of B is added. This ensures that the B element added exists primarily in a free state in the steel, thereby guaranteeing that the substrate has high hardenability, and thus significantly improving the strength of the steel plate.

In step 3), the reason for heating the clad slab to 1050-1220 °C for rolling is as follows: if the heating temperature is less than 1050 °C, the carbides and nitrides in the cast slab for the substrate cannot be dissolved completely, which will reduce the pinning effect of the carbides on the austenite grains during rolling; at the same time, within this temperature range, it is beneficial to the homogenization of austenite in the cladding layer material, and the carbides in the cladding layer material can also be dissolved completely. If the cast slab is heated to a temperature higher than 1220 °C, it can easily cause a rapid growth of austenite grains in the substrate layer and the cladding layer material, damaging the mechanical properties of the steel.

Accordingly, the accumulated reduction rate of the slab in the first stage of rolling is preferably not less than 60%, the accumulated reduction rate in the second stage of rolling is not less than 20%, the reduction rate in the last pass is 8-18%, the total accumulated reduction rate of rolling is not less than 80%, and the final rolling temperature is at least 850 °C.

The first-stage high-temperature and high-reduction rolling process allows the material to fully recrystallize during the rolling deformation process, and allows continuous refining of austenite grains, while inhibiting formation of large austenite grains in the steel, thereby improving the low-temperature toughness of the steel. If the accumulated reduction rate in the first stage is less than 60%, the austenite grain size in the steel is large, which is not conducive to the strength and toughness of the steel plate.

When the accumulated reduction rate in the second stage of rolling is not less than 20%, the refinement of austenite grains can be further promoted. When the reduction rate of the final rolling pass is 8-18%, the dislocation density in the steel can be increased, and the strength of the steel plate can be guaranteed. If the reduction rate is less than 8%, the dislocation density is low, which is not conducive to improvement of the strength. If the reduction rate is higher than 18%, the rolling torque is too large, which is detrimental to the rolling equipment. If the final rolling temperature is lower than 850 °C, the deformation resistance of the steel plate increases, making it difficult to guarantee a large final rolling reduction rate.

In step 4), the quenching temperature is 935-975°C, and the quenching hold time T1 = (1-1.2) H. After the hold time is over, the steel plate is removed from the quenching furnace and water-cooled to room temperature, where the unit of T1 is min and H is the thickness of the substrate layer in mm.

It should be noted that during the quenching process, if the quenching temperature is lower than 935 °C, the homogenization of austenite in the steel takes a long time, which reduces the heat treatment efficiency. If the quenching temperature of the steel is higher than 975 °C, some austenite in the carbon steel tends to grow, which easily leads to formation of a mixed crystal structure, not conducive to the uniformity of the steel structure. Accordingly, if the hold time T1 for the steel at the quenching temperature is less than 1H, sufficient austenitization cannot be achieved. If the hold time T1 for the steel exceeds 1.2H, it will extend beyond the time required for austenitization of the steel, thus reducing the efficiency of the quenching process.

In step 4), the tempering temperature is 650-725 °C; the tempering hold time is T2=(1-1.5) H; after the hold time is over, the steel plate is removed from the tempering furnace and water-cooled to room temperature, wherein the unit of T2 is min, and H is the thickness of the substrate layer in mm.

During the tempering process, if the tempering temperature of the steel is lower than 650 °C, a longer tempering time is required to remove the residual quenching stress in the steel, which will reduce the tempering efficiency and slow down the formation rate of MC precipitates in the carbon steel. If the tempering temperature of the steel is higher than 725 °C, the MC precipitates in the steel are prone to Ostwald coarsening and agglomeration, which is not conducive to formation of fine and dispersed MC precipitates in the steel. Accordingly, if the tempering hold time T2 is less than 1H, the quenching stress of the steel tends to be unable to be removed completely. If the tempering hold time T2 is more than 1.5H, the MC precipitates in the steel are prone to coarsening and will reduce the production efficiency of the tempering process.

Compared with the prior art, the advantages and beneficial effects of the present disclosure are as follows:
1. In the present disclosure, the finely dispersed spherical (2-5µm) oxide Ti₂O₃ formed in the steel can act as nucleation sites for the MC carbide precipitates. Combined with the optimized alloy composition design and heat treatment process design, a large quantity of dispersed nanoscale MC (M represents one or more of V, Nb, and Ti) precipitates can be formed in the substrate layer, thereby fixing the free carbon element in the substrate layer, reducing diffusion and aggregation of the carbon element towards the clad interface, reducing precipitation of carbides at the grain boundaries of the stainless steel, and ensuring the corrosion resistance of the rolled clad steel plate. Particularly, when this rolled clad steel plate is used for high-temperature equipment, under high-temperature process conditions of 300 °C - 450 °C, the high-melting-point oxide Ti₂O₃ (having a melting point of 2130 °C) formed through controlled smelting can still exist stably in the steel and continue to play a role as the precipitation nuclei of MC carbides. In other words, some of the free carbon element present in steel can still react with alloying elements in the steel using Ti₂O₃ as nucleation sites to form fine MC carbides, thereby further fixing the carbon element, ensuring that the carbon element in the carbon steel does not diffuse to the interface, and thus protecting the corrosion resistance of the rolled clad steel plate under long-term high-temperature service conditions.
2. In the current production process of low-alloy high-strength steel, efforts are made to achieve steel cleanliness, and aluminum is commonly used as a deoxidizer to minimize the oxygen content in steel. Aluminum boasts high deoxidation efficiency; however, its deoxidation product-alumina (Al₂O₃) inclusions formed in molten steel-exerts adverse effects on the flaw detection and mechanical properties of steel plates. Specifically, individual Al₂O₃ inclusions mostly exhibit sharp-edged morphologies, which tend to act as crack initiation sites in steel. Meanwhile, Al₂O₃ inclusions are highly prone to agglomeration in molten steel, forming large-sized Al₂O₃ inclusion clusters that clog casting nozzles. The presence of large-sized inclusions in steel are highly prone to cause significant fluctuations in the tensile and impact properties of steel plates. Additionally, Al₂O₃ inclusions cannot serve as nucleation sites for carbide precipitates.

In the present disclosure, spherical Ti₂O₃ oxides (2-5 µm) with high melting point, fine size and dispersed distribution are finally formed in steel by controlling the type of deoxidizers, deoxidation sequence and the addition amount of deoxidizers during steel smelting. Ti₂O₃ oxides are not prone to agglomeration and growth in molten steel, and have no sharp edges or corners, thus exerting no obvious detrimental effect on the flaw detection and mechanical properties of steel plates, and can optimize the microstructure type of steel plates. By controlling the proportions of the element contents, the precipitation of TiN is controlled to refine austenite grains. By designing the addition sequence of alloying elements in the steel grade, the oxidation and nitridation of boron (B) can be effectively reduced, so that the added boron can be utilized to the greatest extent, the hardenability of the steel plate is maximally improved, grains are refined, and the steel plate is ensured to have high strength and excellent low-temperature toughness.

Further, by controlling the preferable smelting process, especially by controlling the type of the deoxidizer, the sequence of deoxidation, and the amount of the deoxidizer added, the finely dispersed spherical oxide Ti₂O₃ (2-5µm) formed in the steel can serve as nucleation sites for MC carbide precipitates. In coordination with the design of the optimized alloy composition and the design of the heat treatment process, a large amount of dispersed nanoscale MC (M represents one or more of V, Nb, and Ti) precipitates can be formed in the substrate layer. This enables fixation of the free carbon element in the substrate layer, reducing diffusion and aggregation of the carbon element towards the clad interface, reducing precipitation of carbides at the grain boundaries in the stainless steel, and guaranteeing the corrosion resistance of the rolled clad steel plate. Particularly, when this rolled clad steel plate is used for high-temperature equipment, under high-temperature process conditions of 300 °C - 450 °C, the high-melting-point oxide Ti₂O₃ (having a melting point of 2130 °C) formed by controlling the smelting process can still exist stably in the steel and continue to play a role as the precipitation nucleus of MC carbides. In other words, some of the free carbon element present in steel can still react with alloying elements in the steel using Ti₂O₃ as nucleation sites to form fine MC carbides, thereby further fixing the carbon element, ensuring that the carbon element in the carbon steel does not diffuse to the interface, and thus protecting the corrosion resistance of the rolled clad steel plate under long-term high-temperature service conditions.

The clad steel plate according to the present disclosure has excellent corrosion resistance and can be effectively used in energy and chemical industries as a material for manufacturing vessels for reactions at temperatures as high as 300-450 °C. It has great practical significance and a very broad application prospect.

### Detailed Description

The present disclosure will be further described below with reference to the specific Examples. Nevertheless, such description does not constitute any undue limitation on the technical solution of the present disclosure.

The compositions of the Examples in the present disclosure are shown in Table 1. The balance includes Fe and other unavoidable impurities. In each of the Examples and Comparative Examples of the present disclosure, the cladding layer material of the rolled clad steel plate is austenitic stainless steel which is used as an example for demonstration. The manufacturing process parameters for the Examples of the present disclosure are shown in Table 2. Commercially available austenitic stainless steel may be used as a slab for the cladding layer.

The manufacturing method in the Examples of the present disclosure includes the following steps:
1) Smelting and casting: Smelting and continuous casting were carried out using the chemical compositions shown in Table 1 to obtain cast slabs. The smelting equipment used was a 500 kg vacuum induction furnace. First, 410 kg industrially pure iron was added to the vacuum induction furnace. At the same time, a certain amount of CaO was added to the furnace according to the alloy formulation of the steel (the added CaO was used for slag formation during smelting). A vacuum was drawn, and smelting was carried out under a minimum vacuum of about 25 Pa. Argon gas was filled for atmosphere protection during the smelting process. After the pure iron was melted down, deoxidizers Si+Mn and Al were added in sequence for pre-deoxidation. According to the online monitoring results of the molten steel composition, the amount of the deoxidizers added was adjusted finely, and the oxygen level of free oxygen in the molten steel was controlled to be 0.0020%-0.0075%. Then, an appropriate amount of Ti was added for final deoxidation. Alloys such as Nb and V were added for alloying treatment. Finally, B was added. The casting was carried out by injection to form a slab.
2) Assembling: The carbon steel slab for the substrate and the stainless steel slab for the cladding layer were surface treated. The roughness of surfaces of the two materials to be joined was ≤2.0Ra. After surface inspection, it was ensured that the surfaces were free of surface defects such as oil stains, slag inclusions, and cracks. After welding the periphery of the slabs, a vacuum was drawn to 8-60Pa.
3) Rolling: The clad slab was heated at 1050-1220 °C and then rolled in two stages. The accumulated reduction rate of the slab in the first stage of rolling was not less than 60%, the accumulated reduction rate in the second stage of rolling was not less than 20%, the reduction rate of the last pass was 8-18%, the accumulated reduction rate was not less than 80%, and the final rolling temperature was at least 850 °C.
4) Heat treatment: Quenching and tempering treatment were performed on the rolled clad steel plate. For the quenching treatment on the rolled clad steel plate, the quenching temperature was 935-975 °C, and the quenching hold time T1 was 1-1.2H. After the hold time was over, the plate was removed from the furnace and water-cooled to room temperature. Then, the tempering treatment was performed. The tempering temperature was 650-725 °C, and the tempering hold time T2 was 1-1.5H. After removing from the furnace, the plate was air-cooled, wherein H represents the thickness of the steel plate, in mm.

In the present disclosure, the chemical compositions and related processes designed for the substrates of the clad steel plates of Examples 1 to 7 all meet the design specifications of the present disclosure.

In contrast, the rolled clad steel plates of Comparative Examples 1 to 3 were manufactured using substantially the same process steps as in Example 1, except that the alloying element contents in the substrate layer carbon steel in Comparative Examples 1 to 2 were outside of the designed range, while the alloying element contents in the substrate layer carbon steel in Comparative Example 3 were still within the designed range. However, for Comparative Examples 1 to 3, the order of adding the deoxidizers and the alloying element B in the smelting and casting operations of step (1) above was different; and the tempering process in the heat treatment was different.

Electrolytic samples were taken from the carbon steel material of the substrate layer and the stainless steel of the cladding layer in each of the clad steel plates of Examples 1 to 7 and the control rolled clad steel plates of Comparative Examples 1 to 3 in the present disclosure. Electrolytic extraction was used to extract the MC precipitates from the stainless steel. The precipitates of different sizes were separated by using filter membranes with different particle sizes. The particle size distribution of the precipitates was detected using a laser particle size analyzer, and an image analysis software was used to confirm the quantity and size distribution of the MC precipitates (M represents one or more of Nb, V, Ti, and Cr) in each of the steel plates of the Examples and Comparative Examples. Finally, the data obtained from the above observation and analysis are listed in Table 3 (substrate layer material) and Table 4 (cladding layer material at the bonding interface).

As shown in Table 3, the total number of precipitates in the substrate carbon steel of the rolled clad steel plates in Examples 1 to 7 ranges from 582 to 791, far more than that in the substrate carbon steel in the Comparative Examples (from 340 to 432). This indicates that by implementing the technical solution of the present disclosure, a greater number of MC carbide precipitates can be formed in the substrate layer carbon steel material, thereby ensuring the effect of fixing the free carbon in the carbon steel by means of the stable carbides in the substrate carbon steel as designed in the technical solution. Further, the MC precipitates in the substrate carbon steel of the rolled clad steel plates in Examples 1 to 7 are relatively small in size, mainly ranging from 200 nm to 600 nm. The MC precipitates have an average major axis length of less than 500 nm and a bulk density of higher than 2.0×10⁴ precipitates/mm³. The proportion of MC precipitates with a size of less than 500 nm to the total number of MC precipitates is more than 50%. When the precipitates are small in size, they can pin the growth of austenite grains to some extent, thereby refining the grains and further improving the strength and toughness of the material.

In contrast, the MC precipitates in the substrate carbon steel of the rolled clad steel plates in Comparative Examples 1 to 3 have a larger size, with an average major axis length of greater than 800 nm. The precipitate size is distributed mainly over a range of ≥800 nm, and the proportion of precipitates with a size of at least 1000 nm is relatively high. Their pinning effect on austenite grains is not good, which leads to a larger grain size and affects the strength and toughness of the steel plate. Because the number of stable precipitates formed in the carbon steel in the Comparative Examples is small, less free carbon in the carbon steel is fixed by the precipitates. As a result, a large amount of free carbon segregates towards the bonding interface, leading to precipitation of a lot of carbides along grain boundaries in the cladding layer material at the bonding interface, thereby reducing the corrosion resistance of the cladding layer material at the interface.

As shown in Table 4, the number of MC precipitates detected in the cladding layer material near the transition layer in the clad steel plates in Examples 1 to 7 is 146-182, far less than 403-411 in the Comparative Examples. Further, the bulk density of the MC precipitates in the cladding layer material at the bonding interface (transition layer) in the Examples is less than 1×10⁴ precipitates/mm³. This indicates that in the substrate layer carbon steel material in Examples 1 to 7, the amount of carbon diffused into the cladding layer material through the bonding interface is small, so the amount of formed MC is also small. In Comparative Examples 1 to 3, because the carbon element in the carbon steel diffuses into the cladding layer material in large quantities through the interface, a large number of carbides exist in the cladding layer material. Meanwhile, as further shown in Table 4, in Examples 1 to 7, the MC precipitates in the cladding material at the bonding interface (transition layer) has an average major axis length of less than 700 nm, and the proportion of MC precipitates with a size of less than 700 nm to the total number of MC precipitates is greater than 50%. In contrast, the average size of the MC precipitates detected in the Comparative Examples is greater than 900 nm. This further illustrates that the carbides in the Examples are far more effective in fixing free carbon than those in the Comparative Examples.

After analyzing the carbide precipitates in the clad steel plates in Examples 1 to 7 and the steel plates in Comparative Examples 1 to 3, the mechanical properties (according to Standards ASTM A370-24, ASTM A264-12 (2019)) and corrosion resistance (according to Standard ASTM A262-15 (2021) Practice E) of the steel plates in Examples 1 to 7 and Comparative Examples 1 to 3 were also evaluated. The evaluation results are shown in Table 5.

It can be seen from Table 5 that the yield strength and tensile strength of the comparative carbon steel substrates are both lower than those of the Examples. This is mainly because the smelting process, the order of adding the alloying elements, and the heat treatment process for the comparative carbon steel substrates are different from those used in the Examples. Consequently, the function of the B element to improve the hardenability of the comparative steel cannot be fully utilized, and the precipitates in the steel are different and have a different effect on the microstructure of the steel plate. The surface microstructure of the substrate of the clad steel plate according to the present disclosure is 60-80% bainite + 20-40% ferrite + MC precipitates, and the central microstructure of the substrate is 30-40% bainite and 60-70% ferrite+ MC precipitates. Small-sized precipitates in the Examples have further refined the austenite grains, which helps to improve the strength and toughness of the steel plate to a certain extent.

The stainless steel near the bonding interface (transition layer) in the rolled clad steel plates in the Examples and Comparative Examples was sampled and subjected to intergranular corrosion test according to ASTM A262 Practice E Method. The test results are shown in Table 6. The results show that the stainless steel at the bonding interface in the rolled clad steel plates prepared according to the technical requirements of the present disclosure has excellent corrosion resistance. Therefore, the corrosion resistance of the cladding layer stainless steel in the clad steel plates in Examples 1-7 is far superior to that of the Comparative Examples.

To sum up, in the clad steel plate according to the present disclosure, a large number of dispersed nanoscale MC (M represents one or more of Nb, V, Ti, and Cr) precipitates can be generated in the steel by reasonable chemical composition design and optimized production process, especially by controlling the type of the deoxidizer, the sequence of deoxidation, and the amount of the deoxidizer added during the steelmaking process, and carrying out an alloying treatment in a specified order. These nanoscale MC precipitates can fix the free carbon element in the substrate carbon steel, thereby preventing the carbon element from diffusing to the bonding interface (transition layer) in large quantities to cause formation of a lot of carbides in the stainless steel at the bonding interface and, in turn, degradation of its corrosion resistance. Therefore, the technical solution of the present disclosure can guarantee the strength and toughness of the carbon steel substrate. At the same time, it can greatly improve the corrosion resistance of the rolled clad steel plate.

Further, it should be noted that the combinations of the various technical features in the present disclosure are not limited to the combination modes described in the claims of this application or the combination modes described in the specific Examples. All technical features described in this application can be freely combined in any way, unless they contradict each other.

It should also be noted that the Examples set forth above are only specific embodiments of the present disclosure. Obviously, the present disclosure is not limited to the above embodiments. Any similar changes or modifications made thereto that can be directly derived or easily conceived by those skilled in the art from the content disclosed in the present disclosure should fall within the protection scope of the present disclosure.

**Table 1 (Unit: weight percent)**

| | Slab | C | Si | Mn | P | S | Als | Ti | B | V | O | N | Cu | Ni | Nb | Ca | Cr |
|---|---|---|---|---|---|---|---|---|---|---|---|---|---|---|---|---|---|
| Ex. 1 | Substrate | 0.096 | 0.32 | 0.56 | 0.016 | 0.002 | 0.011 | 0.009 | 0.0006 | 0.17 | 0.001 | 0.004 | 0.02 | 0.032 | 0.049 | 0.0005 | - |
| | Cladding | 0.020 | 0.73 | 1.35 | 0.011 | 0.003 | - | - | - | - | 0.002 | 0.091 | - | 8.5 | - | - | 18.6 |
| Ex. 2 | Substrate | 0.145 | 0.21 | 0.11 | 0.013 | 0.006 | 0.015 | 0.019 | 0.0019 | 0.49 | 0.004 | 0.002 | 0.22 | - | 0.023 | 0.0012 | - |
| | Cladding | 0.020 | 0.73 | 1.35 | 0.011 | 0.003 | - | - | - | - | 0.002 | 0.091 | - | 8.5 | - | - | 18.6 |
| Ex. 3 | Substrate | 0.012 | 0.58 | 1.69 | 0.010 | 0.003 | 0.005 | 0.014 | 0.0025 | 0.38 | 0.005 | 0.003 | 0.15 | 0.18 | 0.038 | - | - |
| | Cladding | 0.020 | 0.73 | 1.35 | 0.011 | 0.003 | - | - | - | - | 0.002 | 0.091 | - | 8.5 | - | - | 18.6 |
| Ex. 4 | Substrate | 0.053 | 0.65 | 0.34 | 0.009 | 0.009 | 0.006 | 0.012 | 0.0011 | 0.29 | 0.003 | 0.0018 | 0.54 | 0.65 | 0.042 | 0.0053 | - |
| | Cladding | 0.020 | 0.73 | 1.35 | 0.011 | 0.003 | - | - | - | - | 0.002 | 0.091 | - | 8.5 | - | - | 18.6 |
| Ex. 5 | Substrate | 0.115 | 0.69 | 0.46 | 0.014 | 0.007 | 0.012 | 0.017 | 0.0025 | 0.43 | 0.002 | 0.002 | - | - | 0.028 | - | - |
| | Cladding | 0.020 | 0.73 | 1.35 | 0.011 | 0.003 | - | - | - | - | 0.002 | 0.091 | - | 8.5 | - | - | 18.6 |
| Ex. 6 | Substrate | 0.075 | 0.33 | 1.11 | 0.012 | 0.005 | 0.008 | 0.010 | 0.0030 | 0.35 | 0.002 | 0.0049 | 0.08 | 0.39 | 0.001 | 0.0021 | - |
| | Cladding | 0.020 | 0.73 | 1.35 | 0.011 | 0.003 | - | - | - | - | 0.002 | 0.091 | - | 8.5 | - | - | 18.6 |
| Ex. 7 | Substrate | 0.118 | 0.45 | 0.32 | 0.015 | 0.007 | 0.013 | 0.024 | 0.0048 | 0.41 | 0.003 | 0.0022 | - | 0.41 | 0.041 | 0.0041 | - |
| | Cladding | 0.020 | 0.73 | 1.35 | 0.011 | 0.003 | - | - | - | - | 0.002 | 0.091 | - | 8.5 | - | - | 18.6 |
| Comp. Ex. 1 | Substrate | 0.176 | 0.11 | 1.78 | 0.017 | 0.018 | 0.003 | 0.001 | 0.0003 | 0.57 | 0.0053 | 0.0063 | 0.64 | - | 0.062 | 0.0060 | - |
| | Cladding | 0.020 | 0.73 | 1.35 | 0.011 | 0.003 | - | - | - | - | 0.002 | 0.091 | - | 8.5 | - | - | 18.6 |
| Comp. Ex.2 | Substrate | 0.005 | 0.13 | 0.08 | 0.019 | 0.014 | 0.019 | 0.028 | 0.0055 | 0.66 | 0.0072 | 0.0073 | - | 0.79 | 0.070 | 0.0081 | - |
| | Cladding | 0.020 | 0.73 | 1.35 | 0.011 | 0.003 | - | - | - | - | 0.002 | 0.091 | - | 8.5 | - | - | 18.6 |
| Comp. Ex.3 | Substrate | 0.093 | 0.33 | 135 | 0.016 | 0.002 | 0.011 | 0.019 | 0.0017 | 0.49 | 0.004 | 0.0042 | 0.26 | 0.67 | 0.036 | - | - |
| | Cladding | 0.020 | 0.73 | 1.35 | 0.011 | 0.003 | - | - | - | - | 0.002 | 0.091 | - | 8.5 | - | - | 18.6 |

**Table 2**

| | Substrate thickness (mm) | Cladding thickness (mm) | Transition layer thickness (µm) | Oxygen level in molten steel after Al deoxidation (%) | Slab surface roughness Ra | Clad slab vacuum Pa | Heating temperature (°C) | Final rolling temperature (°C) | 1^{st} stage reduction (%) | 2^{nd} stage reduction (%) | Final rolling reduction (%) | Total accumulated reduction (%) | Quenching temperature (°C) | Quenching hold time (min) | Tempering temperature (°C) | Tempering hold time (min) |
|---|---|---|---|---|---|---|---|---|---|---|---|---|---|---|---|---|
| Ex. 1 | 10 | 2 | 2 | 0.0026 | 1.5 | 21 | 1120 | 940 | 68 | 29 | 15 | 97 | 935 | 11 | 695 | 15 |
| Ex. 2 | 30 | 4 | 5 | 0.0049 | 1.6 | 9 | 1180 | 955 | 61 | 32 | 17 | 93 | 940 | 30 | 724 | 41 |
| Ex. 3 | 115 | 12 | 25 | 0.0063 | 1.2 | 36 | 1217 | 960 | 66 | 26 | 9 | 92 | 950 | 15 | 720 | 20 |
| Ex. 4 | 80 | 6 | 13 | 0.0057 | 1.0 | 47 | 1200 | 955 | 60 | 20 | 12 | 80 | 955 | 80 | 711 | 120 |
| Ex. 5 | 150 | 15 | 36 | 0.0073 | 1.8 | 58 | 1150 | 935 | 62 | 25 | 10 | 87 | 960 | 55 | 708 | 71 |
| Ex. 6 | 50 | 3 | 11 | 0.0064 | 1.7 | 26 | 1090 | 855 | 61 | 24 | 11 | 85 | 973 | 77 | 705 | 100 |
| Ex. 7 | 198 | 19 | 43 | 0.0040 | 1.9 | 22 | 1055 | 930 | 70 | 28 | 18 | 98 | 960 | 110 | 652 | 150 |
| Comp. Ex. 1 | ***10*** | ***2*** | ***3*** | ***0.0137*** | 2.8 | 71 | 1210 | 930 | 28 | 70 | 5 | 98 | 970 | 12 | 780 | ***120*** |
| Comp. Ex. 2 | ***65*** | ***6*** | ***6*** | ***0.0121*** | 3.1 | 92 | 1180 | 940 | 77 | 10 | 3 | 87 | 950 | 70 | 590 | 97 |
| Comp. Ex. 3 | ***100*** | ***12*** | ***39*** | ***0.0117*** | 3.3 | 89 | 1120 | 950 | 40 | 33 | 6 | 73 | 960 | ***100*** | 770 | ***120*** |

**Table 3**

| | 0-100nm (number) | 100-200 nm (number) | 200-300 nm (number) | 300-400 nm (number) | 400-500 nm (number) | 500-600 nm (number) | 600-700 nm (number) | 700-800 nm (number) | 800-900 nm (number) | 900-1000 nm (number) | >1000 nm (number) | Total (number) | Average size (nm) | Bulk density 10⁴/mm³ |
|---|---|---|---|---|---|---|---|---|---|---|---|---|---|---|
| Ex. 1 | 8 | 20 | 179 | 102 | 110 | 122 | 15 | 16 | 15 | 18 | 20 | 625 | 437 | 2.8 |
| Ex. 2 | 10 | 43 | 195 | 112 | 151 | 131 | 19 | 28 | 12 | 17 | 23 | 741 | 430 | 3.5 |
| Ex. 3 | 12 | 29 | 187 | 99 | 156 | 110 | 1 | 0 | 9 | 10 | 18 | 631 | 402 | 2.9 |
| Ex. 4 | 1 | 41 | 160 | 89 | 115 | 180 | 21 | 18 | 9 | 15 | 14 | 663 | 440 | 3.1 |
| Ex. 5 | 6 | 24 | 198 | 152 | 188 | 162 | 10 | 12 | 10 | 18 | 11 | 791 | 421 | 3.8 |
| Ex. 6 | 5 | 36 | 151 | 96 | 187 | 117 | 0 | 1 | 18 | 9 | 9 | 629 | 413 | 2.7 |
| Ex. 7 | 7 | 26 | 109 | 89 | 176 | 115 | 1 | 3 | 21 | 18 | 17 | 582 | 448 | 2.3 |
| Comp. Ex. 1 | 0 | 0 | 1 | 3 | 12 | 22 | 25 | 33 | 56 | 78 | 110 | 340 | 874 | 1.4 |
| Comp. Ex. 2 | 0 | 0 | 0 | 5 | 15 | 35 | 26 | 47 | 58 | 94 | 152 | 432 | 875 | 1.6 |
| Comp. Ex. 3 | 0 | 0 | 1 | 1 | 12 | 42 | 30 | 55 | 62 | 96 | 125 | 424 | 862 | 1.5 |

**Table 4**

| | 0-100 nm (number) | 100-200 nm (number) | 200-300 nm (number) | 300-400 nm (number) | 400-500 nm (number) | 500-600 nm (number) | 600-700 nm (number) | 700-800 nm (number) | 800-900 nm (number) | 900-1000 nm (number) | >1000 nm (number) | Total (number) | Average size (nm) | Bulk density 10⁴/mm³ |
|---|---|---|---|---|---|---|---|---|---|---|---|---|---|---|
| Ex. 1 | 0 | 8 | 17 | 12 | 11 | 22 | 35 | 26 | 15 | 18 | 2 | 166 | 632 | 0.7 |
| Ex. 2 | 0 | 5 | 19 | 11 | 15 | 23 | 39 | 38 | 12 | 17 | 3 | 182 | 638 | 0.9 |
| Ex. 3 | 1 | 6 | 18 | 9 | 15 | 21 | 25 | 41 | 19 | 10 | 5 | 170 | 640 | 0.8 |
| Ex. 4 | 1 | 5 | 16 | 8 | 11 | 18 | 41 | 28 | 19 | 15 | 4 | *166* | 654 | 0.7 |
| Ex. 5 | 0 | 4 | 19 | 15 | 18 | 22 | 30 | 19 | 10 | 18 | 1 | 156 | 610 | 0.6 |
| Ex. 6 | 1 | 6 | 15 | 9 | 17 | 17 | 20 | 33 | 18 | 9 | 3 | 148 | 632 | 0.5 |
| Ex. 7 | 0 | 2 | 10 | 8 | 16 | 25 | 21 | 27 | 12 | 18 | 7 | 146 | 678 | 0.5 |
| Comp. Ex. 1 | 2 | 8 | 9 | 13 | 22 | 12 | 38 | 33 | 66 | 178 | 130 | 411 | 925 | 1.6 |
| Comp. Ex. 2 | 7 | 6 | 0 | 11 | 15 | 30 | 46 | 27 | 88 | 121 | 152 | 403 | 901 | 1.5 |
| Comp. Ex. 3 | 9 | 1 | 1 | 11 | 12 | 40 | 50 | 25 | 92 | 133 | 155 | 429 | 965 | 1.5 |

**Table 5**

| | Yield strength of the carbon steel substrate layer (MPa) | Tensile strength of the carbon steel substrate layer (MPa) | Percentage reduction of area of the carbon steel substrate layer (%) | Elongation of the carbon steel substrate layer (%) | Impact absorption energy at -30°C of the carbon steel substrate layer (J) | Impact absorption energy at -50°C of the carbon steel substrate layer (J) | Shear strength at the clad interface (MPa) | Grain size of the carbon steel substrate layer (grade) | Microstructure composition (%) | |
|---|---|---|---|---|---|---|---|---|---|---|
| | | | | | | | | | Surface (B+F) | Core (B+F) |
| Ex. 1 | 421 | 533 | 76 | 23 | 198 | 156 | 411 | 8 | 70+30 | 39+61 |
| Ex. 2 | 490 | 596 | 72 | 22 | 183 | 143 | 386 | 7.5 | 65+35 | 37+63 |
| Ex. 3 | 411 | 519 | 70 | 24 | 201 | 152 | 356 | 8 | 62+38 | 35+65 |
| Ex. 4 | 398 | 509 | 75 | 25 | 211 | 171 | 338 | 8 | 60+40 | 33+67 |
| Ex. 5 | 401 | 514 | 72 | 24 | 203 | 160 | 329 | 8 | 78+22 | 35+65 |
| Ex. 6 | 391 | 497 | 76 | 23 | 229 | 180 | 319 | 7.0 | 72+28 | 34+66 |
| Ex. 7 | 389 | 489 | 74 | 23 | 235 | 178 | 326 | 8 | 69+31 | 32+68 |
| Comp. Ex. 1 | 312 | 427 | 76 | 23 | 102 | 100 | 281 | 5.5 | 40+60 | 25+75 |
| Comp. Ex. 2 | 320 | 436 | 75 | 24 | 105 | 99 | 278 | 5 | 38+62 | 21+79 |
| Comp. Ex. 3 | 337 | 470 | 74 | 24 | 108 | 95 | 291 | 5 | 32+68 | 20+80 |

**Table 6**

| | Cracking | Qualified |
|---|---|---|
| Ex. 1 | N | Y |
| Ex. 2 | N | Y |
| Ex. 3 | N | Y |
| Ex. 4 | N | Y |
| Ex. 5 | N | Y |
| Ex. 6 | N | Y |
| Ex. 7 | N | Y |
| Comp. Ex. 1 | Y | N |
| Comp. Ex. 2 | Y | N |
| Comp. Ex. 3 | Y | N |

## Claims

1. A corrosion-resistant rolled clad steel plate for medium-temperature equipment made by bonding and rolling carbon steel as a substrate and stainless steel as a cladding layer, comprising a substrate layer, a cladding layer, and a transition layer between the substrate layer and the cladding layer, wherein the substrate layer comprises the following components by weight percentage: C: 0.01%-0.15%, Si: 0.2%-0.7%, Mn: 0.1%-1.70%, Ti: 0.006%-0.025%, Als: 0.004%-0.015%, Nb: 0.0010%-0.050%, V: 0.15%-0.50%, B: 0.0005%-0.0050%, N: 0.0015%-0.0050%, P≤0.0165%, S≤0.010%, O≤0.005%, and a balance including Fe and other unavoidable impurities;
wherein the surface microstructure of the substrate layer is 60-80% by area of bainite + 20-40% by area of ferrite + MC precipitates, and the central microstructure of the substrate layer is 30-40% by area of bainite + 60-70% by area of ferrite + MC precipitates, wherein M represents one or more of Nb, V, and Ti, the average major axis length of the MC precipitates is less than 500 nm, and the bulk density of the MC precipitates with a major axis length of less than 500 nm is greater than 2.0 × 10⁴ precipitates/mm³;
the microstructure of the cladding layer comprises MC precipitates, where M represents one or more of Cr, Nb, Mo, and Ti, the average major axis length of the MC precipitates is less than 700 nm, and the bulk density of the MC precipitates is less than 1.0 × 10⁴ precipitates/mm³.

2. The corrosion-resistant rolled clad steel plate for medium-temperature equipment according to claim 1, wherein the substrate further comprises at least one of the following chemical elements: 0 < Ca ≤ 0.0055%, 0 < Ni ≤ 0.65%, and 0 < Cu ≤ 0.55%.

3. The corrosion-resistant rolled clad steel plate for medium-temperature equipment according to claim 1 or 2, wherein the balance of the substrate layer is Fe and other unavoidable impurities.

4. The corrosion-resistant rolled clad steel plate for medium-temperature equipment according to claim 1 or 2 or 3, wherein a proportion of MC precipitates with a major axis length of less than 500 nm in the substrate layer is greater than 50% of a total number of the MC precipitates.

5. The corrosion-resistant rolled clad steel plate for medium-temperature equipment according to claim 1 or 2 or 3 or 4, wherein the stainless steel is austenitic stainless steel, ferritic stainless steel, duplex stainless steel, or super stainless steel.

6. The corrosion-resistant rolled clad steel plate for medium-temperature equipment according to any one of claims 1-5, wherein the stainless steel comprises the following components by weight percentage: C: 0.01-0.05%; Si: 0.50-0.80%; Mn: 1.10-1.50%; Ni: 6.5-9.5%; Cr: 15.0-22.0%; N: 0.060-0.120%; P: ≤0.015%; S: ≤0.005%; O: ≤0.005%; a balance of Fe and other unavoidable impurities.

7. The corrosion-resistant rolled clad steel plate for medium-temperature equipment according to any one of claims 1-6, wherein the proportion of the MC precipitates with a major axis length of less than 700 nm in the cladding layer is greater than 50% of the total number of the MC precipitates.

8. The corrosion-resistant rolled clad steel plate for medium-temperature equipment according to any one of claims 1-7, wherein the microstructure of the cladding layer further comprises a σ phase in a proportion of ≤1.5% by area, preferably, the proportion of the σ phase near the transition layer is ≤0.5% by area.

9. The corrosion-resistant rolled clad steel plate for medium-temperature equipment according to any one of claims 1-8, wherein the thickness of the substrate of the clad steel plate is ≥6 mm, and the thickness of the cladding layer is ≥2 mm; preferably, the thickness of the transition layer is ≤230 µm; preferably, the thickness of the substrate layer is 6-200 mm or 10-200mm; preferably, the thickness of the cladding layer is 2-20 mm; preferably, the thickness of the transition layer is 2-230 µm or 2-150 µm or 2-50 µm.

10. The corrosion-resistant rolled clad steel plate for medium-temperature equipment according to any one of claims 1-9, wherein the substrate of the clad steel plate has a yield strength of ≥325 MPa, a tensile strength of ≥430 MPa, a percentage reduction of area of ≥60%, an elongation of ≥19%, an impact absorption energy at -30 °C of ≥100 J, and an impact absorption energy at -50 °C of ≥45 J; the grain size grade of the substrate is not lower than 7.0; and the clad steel plate at the clad interface has a shear strength of ≥310 MPa.

11. The corrosion-resistant rolled clad steel plate for medium-temperature equipment according to claim 10, wherein the yield strength of the substrate layer of the clad steel plate is ≥360 MPa, ≥380 MPa; preferably, the yield strength of the substrate layer of the clad steel plate is between 380 MPa and 500 MPa;
the tensile strength of the substrate layer of the clad steel plate of the present disclosure is ≥450 MPa, or ≥480 MPa; preferably, the tensile strength of the substrate layer of the clad steel plate is between 480 MPa and 600 MPa;
the percentage reduction of area of the substrate layer of the clad steel plate is ≥70%, or the percentage reduction of area of the substrate layer of the clad steel plate of the present disclosure is between 60% and 80% or between 70% and 80%;
the elongation of the substrate layer of the clad steel plate is ≥21%; or the elongation of the substrate layer of the clad steel plate is between 19% and 25%;
the substrate layer of the clad steel plate has an impact absorption energy at -30 °C of ≥150 J or ≥180J, or 100-240 J, or 180-240 J;
the substrate layer of the clad steel plate has an impact absorption energy at -50 °C of ≥80 J, ≥100 J, or ≥140 J, or 45-180 J, or 80-180 J, or 100-180 J, or 140-180 J;
the shear strength of the substrate layer of the clad steel plate at the clad interface is ≥330 MPa or 310-420 MPa.

12. A method for manufacturing the corrosion-resistant rolled clad steel plate for medium-temperature equipment of any one of claims 1-11, including the following steps:
1) smelting and casting, preparing a cast slab for a substrate
the above-mentioned composition according to claim 1 or 2 or 3 is smelted and cast into a cast slab for a substrate; during the smelting process, deoxidizers Mn+Si, Al, and Ti alloy are added to a molten steel for deoxidation; during this process, Mn+Si and Al are added sequentially for pre-deoxidation; after pre-deoxidation, the oxygen level of the molten steel is 0.0020%-0.0075%; then, Ti is added for final deoxidation; after deoxidation, B element and other alloying elements are added; then, an injection method is adopted to cast a cast slab for the substrate;
preparing or providing stainless steel as a cast slab for a cladding layer;
2) assembling slabs
the cast slab for the substrate and the cast slab for the cladding layer are surface treated, and then stacked; the periphery of the stacked slabs is welded and sealed, vacuumed, and sealed again to form a clad slab; preferably, the vacuum degree after vacuuming is 8-60 Pa;
3) rolling the clad slab
the clad slab is heated to 1050-1220 °C and then subjected to two-stage rolling; in the first stage, the slab is rolled to an accumulated reduction rate of no less than 60%; in the second stage, the slab is rolled to an accumulated reduction rate of no less than 20%, and the reduction rate in the last pass is 8-18%; the accumulated reduction rate is not less than 80%; and the final rolling temperature is at least 850 °C;
4) heat treatment
the clad steel plate is quenched and tempered.

13. The method for manufacturing the corrosion-resistant rolled clad steel plate for medium-temperature equipment according to claim 12, wherein in step 2), the cast slab for the substrate and the cast slab for the cladding layer are surface treated to ensure that the slab surfaces are free of obvious surface defects of oil stains, slag inclusions, and cracks, while ensuring that the roughness of the processed surfaces of the slabs is not greater than 2.0Ra.

14. The method for manufacturing the corrosion-resistant rolled clad steel plate for medium-temperature equipment according to claim 12, wherein in step 4), the quenching temperature is 935-975 °C; the quenching hold time is T1=(1-1.2) H; after the hold time is over, the clad steel plate is removed from the quenching furnace and water-cooled to room temperature, wherein the unit of T1 is min, and H is the thickness of the substrate layer in mm.

15. The method for manufacturing the corrosion-resistant rolled clad steel plate for medium-temperature equipment according to any one of claims 12-14, wherein in step 4), the tempering temperature is 650-725 °C; the tempering hold time is T2=(1-1.5) H; after the hold time is over, the clad steel plate is removed from the tempering furnace and water-cooled to room temperature, wherein the unit of T2 is min, and H is the thickness of the substrate layer in mm.
